# EUROPÄISCHE PATENTSCHRIFT

(11) **EP 1 380 757 B1**
(45) Veröffentlichungstag und Bekanntmachung des Hinweises auf die Patenterteilung: **19.10.2005**
(21) Anmeldenummer: 03009290.2
(22) Anmeldetag: 24.04.2003
(51) Int. Cl.: F16B 5/02, F16B 39/282, F16B 39/284

(54) **Bauteil mit Befestigungsloch**
Constructional part with fastening hole
Element de construction avec un trou pour la fixation

(30) Priorität: 13.07.2002 DE 10231774
(43) Veröffentlichungstag der Anmeldung: 14.01.2004
(73) Patentinhaber: Electrolux Home Products Corporation N.V., 1930 Zaventem (BE)
(72) Erfinder: Gerstacker, Heinrich, 90478 Nürnberg (DE)
(74) Vertreter: Baumgartl, Gerhard Willi

(56) Entgegenhaltungen:
- WO-A-02/31278
- DE-A- 2 556 137
- DE-C- 3 934 589
- US-A- 3 481 381
- US-A- 5 433 567

## Beschreibung

Die Erfindung betrifft ein Bauteil mit zumindest einem plattenförmigen Abschnitt in dem zumindest ein Befestigungsloch zur Befestigung des Bauteils an einem Unterlageelement angeordnet ist.

Zur Herstellung einer vibrationsbeständigen, hochfesten Schraubverbindung wird bislang ein Verkleidungs- oder Stabilisierungsblech an einer Unterlage, beispielsweise an einem Rahmen oder einem anderen Blech, unter Verwendung einer Zahnscheibe oder eines Sprengrings befestigt. Dies erfordert einen zusätzlichen Arbeitsschritt, um die Zahnscheibe oder den Sprengring auf die Schraube aufzufädeln und dann in das Loch des Blechteiles und der Unterlage einzuführen. Weiterhin geht beim Lösen der Verbindung oft die Zahnscheibe oder der Sprengring verloren, so daß zum Wiederbefestigen eine weitere Scheibe oder ein weiterer Sprengring notwendig ist.

Aus der WO 02/31278 A ist es bekannt, Bauteile mit einer konisch erweiterten Öffnung zwischen Mutter und Schraube derart einzuklemmen, dass beim Verschrauben der konisch erweiterte Rand der Öffnung des Bauteils derart verformt wird, dass der Durchmesser der Öffnung sich dadurch verringert, wodurch ein fester Sitz der Öffnung am Schraubenbolzen erreicht wird.

Aus der DE-A 25 56 137 ist es bekannt, Bauelemente derart zusammenzufügen, dass beide jeweils einen trichterförmigen Durchzug besitzen, die bei der Montage ineinander sitzen und beide Bauteile durch eine die Durchzüge durchgreifende Senkschraube zusammenspannbar sind. Die Trichterwinkel von Senkschraube und Durchzug sind dabei verschieden. Zur Sicherung der Verbindung besitzt dabei eine der Mantelflächen der Durchzüge schmale Radialrippen.

Aus der DE 39 34 589 C1 ist es bekannt, ein dünnwandiges Bauteil aus Metall mit einem Kunststoffteil zu verbinden, wobei eine das Metallteil auf dem Kunststoff befestigende Schraube eine radiale Vorspannung auf den Randbereich des Metallteils erzeugt.

Aus der US-A-5 433 567 ist eine Schraubenmutter bekannt, die zu ihrer Festlegung an ihrem Rand keilförmige Aussparungen besitzt, die mit einem Sicherungsring zusammen arbeiten der seinerseits sowohl in die Aussparung der Mutter als auch in eine Aussparung eines zu befestigenden Bauteils eingreift und dadurch ein Rückdrehen der Mutter verhindert.

Die im Stand der Technik gezeigten Verfahren und Vorrichtungen haben aber den Nachteil, dass sie teilweise nur schwer oder gar nicht mehr zu lösen sind oder einen erhöhten technischen Aufwand verursachen.

Es ist daher Aufgabe der Erfindung, ein Bauteil mit einem Befestigungsloch zur Befestigung an einer Unterlage vorzusehen, mit dem eine hochfeste Schraubverbindung auf einfache Weise hergestellt werden kann.

Diese Aufgabe wird mit den Merkmalen des Anspruchs 1 gelöst.

Gemäß Anspruch 1 weist ein Bauteil zumindest einen plattenförmigen Abschnitt mit zumindest einem Befestigungsloch zur Befestigung des Bauteils an einer Unterlage auf. Die Unterlage ist beispielsweise ein Rahmen eines Haushaltsgerätes, ein Blechverkleidungselement, eine Baueinheit eines Haushaltsgerätes oder dergleichen. Das Bauteil mit dem zumindest einen plattenförmigen Abschnitt ist beispielsweise eine plattenförmige Transportsicherung, eine Gehäuseverkleidung, ein aus einer Platte gebogenes Winkelelement, ein Spannband oder dergleichen. Der plattenförmige Abschnitt ist unmittelbar um das zumindest eine Befestigungsloch herum gewölbt, wobei dieser ohne Wölbung im wesentlich eben ausgebildet ist. Bei einer Befestigung des Bauteils z.B. mit einer Schraube ist die Wölbung in Befestigungsrichtung ganz oder teilweise elastisch deformierbar. Befestigungsrichtung bedeutet hier in Richtung der Druckkraft durch das Befestigungselement, mit dem das Bauteil an der Unterlage befestigt wird. Durch die elastische Kompression der hervorstehenden Wölbung entsteht eine Rückstellkraft, die das Bauteil selbst bei auftretenden Schwingungen bzw. bei Rüttelbewegungen dauerhaft festlegt. Im jungfräulichen Zustand und auch teilweise nach Verwendung steht die Wölbung aus der Ebene des das Loch umgebenden Abschnitts hervor. Bei der Befestigung kann die Wölbung teilweise plastisch deformiert werden, es verbleibt jedoch durch die druckbelastete Wölbung eine elastische Rückstellkraft, die vom Befestigungselement auf das Bauteil ausgeübt wird. Dadurch, daß bei der Befestigung die sich regenerierende, elastische Deformation zumindest teilweise erhalten bleibt, kann das Bauteil mehrmals an diesem Befestigungsloch befestigt werden.

Die Wölbung wird ganz besonders vorteilhaft durch Prägen des plattenförmigen Abschnitts des Bauteils erzeugt, während beispielsweise mit dem gleichen Werkzeug oder im gleichen Arbeitsschritt das Loch ausgestanzt wird.

Vorteilhaft ist das Loch von einem flachen, zur Lochebene parallelen Bereich oder von mehreren solchen Bereichen umgeben, der bzw. die dann beispielsweise bei Befestigung des Bauteils mit einer Zylinderkopfschraube der Schraubenunterseite als Anlagefläche dient bzw. dienen. Vorteilhaft beträgt dabei das Verhältnis des Durchmessers des flachen Bereichs zum Lochdurchmesser ungefähr 2 : 1, so daß bei Befestigung mittels einer Schraube um das Loch herum eine ausreichende Anlagefläche für die Schraubenkopfunterseite zur Verfügung steht.

Ganz besonders vorteilhaft weisen die flachen Bereiche jeweils einen oder mehrere Vorsprünge und/oder Vertiefungen bzw. der flache Bereich mehrere Vorsprünge und/oder Vertiefungen auf, die z.B. beim Einschrauben einer Schraube als rastartige Verriegelungen für die Schraube bzw. das Montageelement wirken. Neben der elastischen Klemmung des Bauteils wird damit einem Selbstlösen der Schraube bei Auftreten von Vibrationen entgegengewirkt. Vorteilhaft sind die Vorsprünge und/oder Vertiefungen asymmetrisch ausgebildet, beispielsweise in Umfangsrichtung in Form von Sägezähnen, so daß in Einschraubrichtung ein geringer Widerstand der Vorsprünge auftritt, während in Löserichtung der Schraube die Rastwirkung der Vorsprünge und/oder Vertiefungen erhöht ist.

Auf einfache Weise läßt sich durch Prägung um das Loch herum eine sperrzahnähnliche Struktur erzeugen, die vorteilhaft mit einer sperrzahnartigen Unterkopfverzahnung einer Schraube derart zusammenwirkt, daß eine Ratschenwirkung eintritt. Dadurch wird ein Selbstlösen einer Befestigungsschraube besonders effektiv verhindert.

Mittels einer topfartigen Auswölbung um das Loch läßt sich der ebene Bereich um das Loch und die Vorspannwirkung der Wölbung auf ganz besonders einfache Weise erreichen. Die Topfwände verlaufen dabei vorteilhaft senkrecht oder ungefähr senkrecht zum plattenförmigen Abschnitt oder sind vorteilhaft schrägverlaufend ausgebildet, so daß die elastische Deformation gegenüber der plastischen Deformation beim Befestigen begünstigt wird. Alternativ oder zusätzlich kann eine grabenartige Vertiefung um das Loch herum vorgesehen sein, so daß beispielsweise die Unterkante des Grabens elastisch oder plastisch in das Unterlageelement eingedrückt wird. Damit wird ein Verschieben des Bauteils gegenüber dem Unterlageelement erschwert.

Anhand von Figuren werden Ausführungsformen der Erfindung erläutert. Es zeigen:
- Fig. 1: einen Ausschnitt eines Montageblechs mit zwei Befestigungslöchern,
- Fig. 2: eine Befestigungsanordnung mit dem Montageblech von Fig. 1 im Querschnitt,
- Fig. 3: eine weitere Ausführungsform einer Wölbung um ein Befestigungsloch und
- Fig. 4: eine schematische Darstellung der Paarung von Rastzähnen in Umfangsrichtung um ein Befestigungsloch.

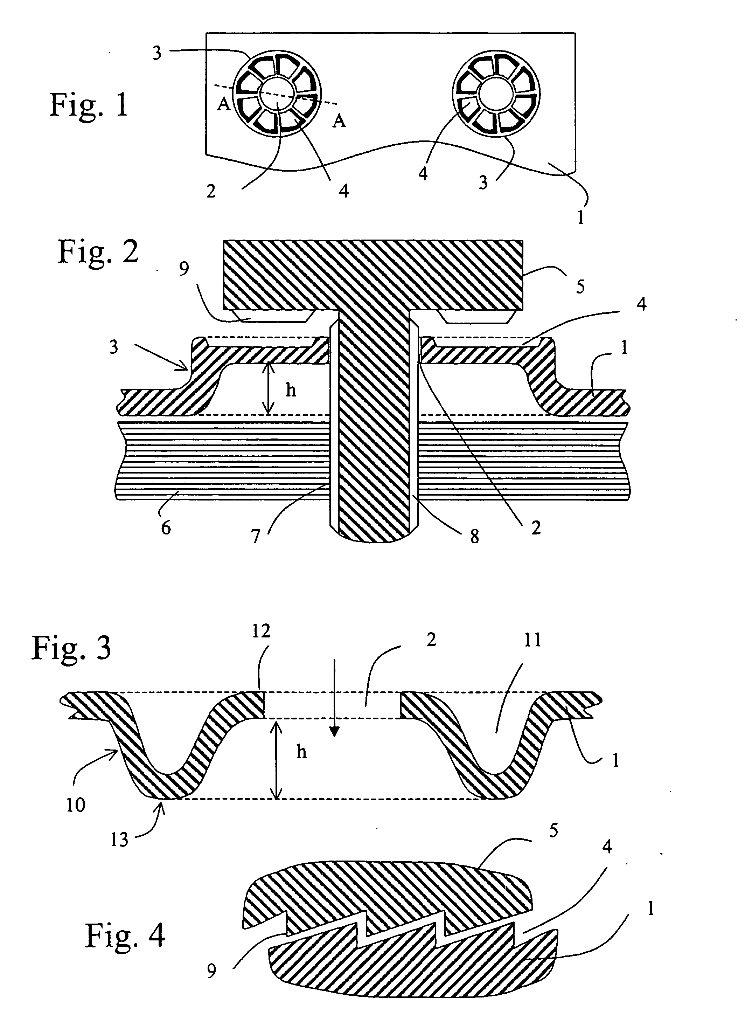

Fig. 1 zeigt schematisch einen Ausschnitt eines Randbereichs eines Montageblechs 1. In den dargestellten Eckbereichen des Montageblechs 1 sind zwei Befestigungslöcher 2 eingestanzt. Durch Prägung des Montageblechs 1 ist das zunächst ebene Montageblech in einem begrenzten Umgebungsbereich unmittelbar um das Loch zu einer topfförmigen Wölbung 3 ausgeformt, wobei die Befestigungslöcher in der Mitte des Topfbodens liegen. Der an die Wölbung 3 anschließende Bereich des Montageblechs ist auch nach der Ausbildung der Wölbung eben. Aus der Zeichenebene von Fig. 1 stehen die topfförmigen Wölbungen 3 nach vorne hervor, so daß die Unterseite des Topfbodens in Draufsicht dargestellt ist. Auf dieser Unterseite befinden sich um das Loch 2 herum angeordnete Vertiefungen 4, die einen stirnseitigen, asymmetrischen Zahnkranz ausbilden. In der Draufsicht von Fig. 1 haben die Vertiefungen 4 im Uhrzeigersinn zunächst eine fallende Flanke mit starker Steigung (durch die dicke Kante der Vertiefung angedeutet), während sich an das Tal der Vertiefung eine Flanke mit flacherer Steigung anschließt, bis schließlich die Flanke in Höhe des Topfbodens wieder in das Plateau des Topfbodens übergeht, bevor die nächste steile Flanke der angrenzenden Vertiefung folgt. Dadurch ergibt sich in Umfangsrichtung um das Loch 2 herum ein sägezahnartiger Verlauf, wie er schematisch in Fig. 4 dargestellt ist.

Fig. 2 zeigt eine Befestigungsanordnung mit dem Montageblech 1 in Querschnittsansicht längs der Linie A - A in Fig. 1. Der auf dem Kopf stehende Topfquerschnitt der Wölbung 3 ist ersichtlich, wobei die Vertiefungen 4 im Bereich der Täler geschnitten sind. Schematisch sind weiterhin eine Schraube 5 und ein Ausschnitt eines Profilrahmens 6 dargestellt, der als Befestigungsunterlage zur Befestigung des Montageblechs 1 dient. Der Profilrahmen 6 hat eine Gewindebohrung 7 und die Schraube 5 hat ein entsprechendes Außengewinde 8. An der Unterseite des Schraubenkopfes ist eine Schraubenunterkopfverzahnung 9 ausgebildet, die mit den zahnkranzartig um das Loch 2 verlaufenden Vertiefungen 4 gepaart ist. Die Paarung zwischen Schraube und topfförmiger Wölbung 3 des Montageblechs 1 ist in Fig. 4 schematisch dargestellt. Dabei gleitet die Schraube 5 in Drehrichtung über die Vertiefungen 4 hinweg, während entgegen der Drehrichtung die Flanken der Vertiefungen 4 und der Schraubenunterkopfverzahnung 9 zur Anlage kommen und eine Selbstlösung der Schraube 5 verhindern.

Fig. 2 stellt den lastfreien Zustand der Befestigungsanordnung vor dem Anziehen der Schraube 5 dar. Die Topfhöhe h ist der Versatz, mit dem der Topfboden der Wölbung 3 durch die Prägung gegenüber der Ebene des umgebenden Blechmaterials des Montageblechs 1 herausgedrückt ist.

Beim Anziehen der Schraube 5 wird durch den Druck der Schraube der Topfboden in Richtung Oberseite des Profilrahmens 6 gedrückt. Wird die Schraube 5 weiter angezogen, so verringert sich die Topftiefe h zunehmend und durch elastische Deformation der Topfwände der Wölbung 3 wird eine elastische Rückstellkraft für den Topfbodenbereich erzeugt. Zur Verringerung einer plastischen Deformation wird die Topftiefe h nicht vollständig aufgebraucht, so daß selbst bei festsitzender Schraube noch ein Abstand zwischen der Oberseite des Profilrahmens 6 und dem Topfboden vorhanden ist. Der Abstand beträgt beispielsweise h/2. Beim Lösen der Schraube gegen den Widerstand der Sperrverzahnung (Fig. 4) stellt sich die ursprüngliche Topftiefe h zumindest teilweise wieder ein, so daß ein nochmaliges, elastisches Befestigen des Montageblechs an diesem Befestigungsloch 2 ermöglicht wird.

Fig. 3 zeigt eine grabenförmige Wölbung 10 als Ausgestaltung zur topfförmigen Wölbung 3 des Montageblechs 1. Dabei ist um das Loch 3 herum eine grabenartige Vertiefung 11 ausgebildet, so daß die Lochebene des Loches 3 gegenüber der Auflagekante 13 um die Kompressionshöhe h versetzt ist. Die Auflagekante 13 liegt auf der Befestigungsunterlage, beispielsweise dem Profilrahmen 6 von Fig. 2 auf und kann sich bei einer entsprechend weichen Unterlage in diese eindrücken. Das Plateau 12, das unmittelbar um das Loch 3 herum angeordnet ist, kann ebenfalls eine sperrzahnähnliche Prägung aufweisen, wie dies in Fig. 1 mit den Vertiefungen 4 dargestellt ist.

### Bezugszeichenliste

- 1:: Montageblech
- 2:: Befestigungsloch
- 3:: topfförmige Wölbung
- 4:: Vertiefung
- 5:: Schraube
- 6:: Profilrahmen
- 7:: Gewindebohrung
- 8:: Außengewinde
- 9:: Schraubenunterkopfverzahnung
- 10:: grabenförmige Wölbung
- 11:: grabenartige Vertiefung
- 12:: Plateau
- 13:: Auflagekante

## Patentansprüche

1. Bauteil mit zumindest einem plattenförmigen Abschnitt in dem zumindest ein Befestigungsloch (2) zur Befestigung des Bauteils (1) an einem Unterlageelement (6) angeordnet ist, wobei der plattenförmige Abschnitt um das zumindest eine Befestigungsloch (2) herum gewölbt ist, die Wölbung (3, 10) zumindest in Befestigungsrichtung deformierbar ist, **dadurch gekennzeichnet, dass** die Wölbung ganz oder teilweise elastisch deformierbar ist und die Lochebene im belastungsfreien Zustand aus der Ebene des Abschnitts hervorsteht (h).

2. Bauteil nach Anspruch 1, **dadurch gekennzeichnet, daß** das Loch (2) von einem oder einer Vielzahl von flachen, zur Lochebene parallelen Bereichen (12) umgeben ist, wobei die Wölbung (3, 10) den oder die flachen Bereiche (12) umfaßt.

3. Bauteil nach Anspruch 2, **dadurch gekennzeichnet, daß** das Verhältnis des Durchmessers des flachen Bereichs (12) oder der Weite der flachen Bereiche um das Loch (2) zum Lochdurchmesser im Bereich von 10:1 bis 1,5:1 liegt, vorzugsweise im Bereich von 5:1 bis 1,5:1 liegt und ganz besonders vorteilhaft 2:1 beträgt.

4. Bauteil nach Anspruch 2 oder 3, **dadurch gekennzeichnet, daß** um das Loch herum rastartige, in Umfangsrichtung zum Loch (2) wirkende Vorsprünge und/oder Vertiefungen (4) angeordnet sind, insbesondere auf dem oder den flachen Bereichen (12).

5. Bauteil nach Anspruch 4, **dadurch gekennzeichnet, daß** die Vorsprünge und/oder Vertiefungen (4) in Umfangsrichtung um das Loch (2) unsymmetrisch ausgebildet sind.

6. Bauteil nach einem der Ansprüche 2 bis 5, **dadurch gekennzeichnet, daß** eine sperrzahnartige Prägung (4) um das Loch (2) herum ausgebildet ist, insbesondere auf dem oder den flachen Bereichen (12).

7. Bauteil nach Anspruch 6, **dadurch gekennzeichnet, daß** die sperrzahnartige Prägung (4) zu einer Schraubenunterkopfverzahnung (9) gepaart ist.

8. Bauteil nach Anspruch 7, **dadurch gekennzeichnet, daß** die Paarung ratschenartig eine Drehrichtung und eine Sperrichtung aufweist.

9. Bauteil nach einem der vorhergehenden Ansprüche, **dadurch gekennzeichnet, daß** die Wölbung (3) topfartig ausgebildet ist.

10. Bauteil nach einem der vorhergehenden Ansprüche, **dadurch gekennzeichnet, daß** die Wölbung (10) eine grabenartige Vertiefung (11) um das Loch (2) umfaßt.

11. Bauteil nach einem der vorhergehenden Ansprüche, **dadurch gekennzeichnet, daß** das Verhältnis des Durchmessers der Wölbung (3, 10) oder der Weite der Wölbung zur Blechstärke im Bereich von 20:1 bis 3:1 liegt, vorzugsweise im Bereich von 15:1 bis 5:1 liegt und ganz besonders vorteilhaft 10:1 beträgt.

12. Bauteil nach einem der vorhergehenden Ansprüche, **dadurch gekennzeichnet, daß** das Verhältnis des Durchmessers der Wölbung (3, 10) oder der Weite der Wölbung zum Versatz des Lochs (2) aus der Ebene des Abschnitts im Bereich von 100:1 bis 5:1 liegt, vorzugsweise im Bereich von 50:1 bis 10:1 liegt und ganz besonders vorteilhaft 30:1 beträgt.

13. Bauteil nach einem der vorhergehenden Ansprüche, **dadurch gekennzeichnet, daß** das Verhältnis des Durchmessers der Wölbung (3, 10) oder der Weite der Wölbung zum Lochdurchmesser im Bereich von 10:1 bis 1,5:1 liegt, vorzugsweise im Bereich von 5:1 bis 2:1 liegt und ganz besonders vorteilhaft 2,5:1 beträgt.

14. Bauteil nach einem der vorhergehenden Ansprüche, **dadurch gekennzeichnet, daß** das Bauteil (1) ein Blechelement ist.

## Claims

1. Component having at least one panel-shaped section in which at least one fixing hole (2) is provided for fixing the component (1) to a substrate element (6), the panel-shaped section being domed around the at least one fixing hole (2), the dome (3, 10) being deformable in at least the fixing direction, **characterised in that** the dome is resiliently deformable entirely or in part and the plane of the hole projects from the plane of the section in the stress-free state (h).

2. Component according to claim 1, **characterised in that** the hole (2) is surrounded by one or a plurality of flat regions (12) parallel to the plane of the hole, the curvature (3, 10) enclosing the flat region(s) (12).

3. Component according to claim 2, **characterised in that** the ratio of the diameter of the flat region (12) or the width of the flat regions about the hole (2) from the hole diameter being in the range of 10:1 to 1.5:1, preferably in the range of 5:1 to 1.5:1, and particularly advantageously being 2:1.

4. Component according to claim 2 or 3, **characterised in that** around the hole catch-like projections and/or recesses (4) are arranged, acting in the circumferential direction to the hole (2), in particular on the flat region(s) (12).

5. Component according to claim 4, **characterised in that** the projections and/or recesses (4) are formed asymmetrically around the hole (2) in the circumferential direction.

6. Component according to one of claims 2 to 5, **characterised in that** a region (4) embossed with locking teeth is formed around the hole (2), in particular on the flat region(s) (12).

7. Component according to claim 6, **characterised in that** the region (4) embossed like locking teeth is paired with screw lower head toothing (9).

8. Component according to claim 7, **characterised in that** the pairing has, in the manner of a ratchet, a rotating direction and a locking direction.

9. Component according to one of the preceding claims, **characterised in that** the dome (3) is formed like a pot.

10. Component according to one of the preceding claims, **characterised in that** the dome (10) comprises a moat-like recess (11) around the hole (2).

11. Component according to one of the preceding claims, **characterised in that** the ratio of the diameter of the dome (3, 10) or the width of the dome to the thickness of the sheet metal is in the range of 20:1 to 3:1, preferably in the range of 15:1 to 5:1, and is particularly advantageously 10:1.

12. Component according to one of the preceding claims, **characterised in that** the ratio of the diameter of the dome (3, 10) or the width of the dome to the offset of the hole (2) from the plane of the section is in the range of 100:1 to 5:1, preferably in the region of 50:1 to 10:1 and is particularly advantageously 30:1.

13. Component according to one of the preceding claims, **characterised in that** the ratio of the diameter of the dome (3, 10) or the width of the dome to the hole diameter is in the range of 10:1 to 1.5:1, preferably in the range of 5:1 to 2:1, and is particularly advantageously 2.5:1.

14. Component according to one of the preceding claims, **characterised in that** the component (1) is a sheet-metal element.

## Revendications

1. Elément de construction avec au moins une section en forme de plaque, dans laquelle est disposé au moins un trou de fixation (2) pour la fixation de l'élément de construction (1) à un élément d'appui (6), où la section en forme de plaque est courbée autour d'au moins un trou de fixation (2), la courbure (3,10) est déformable au moins dans la direction de fixation, **caractérisé en ce que** la courbure est déformable élastiquement entièrement ou partiellement, et que le plan du trou, à l'état sans charge, dépasse du plan de la section (h).

2. Elément de construction selon la revendication 1, **caractérisé en ce que** le trou (2) est entouré par un ou un grand nombre de zones plates (12) parallèles au plan du trou, où la courbure (3,10) comprend la ou les zones plates (12).

3. Elément de construction selon la revendication 2, **caractérisé en ce que** le rapport du diamètre de la zone plate (12) ou de la largeur des zones plates autour du trou (2) au diamètre du trou se situe dans la plage de 10:1 à 1,5:1, de préférence dans la plage de 5:1 à 1,5:1 et selon une préférence particulière de 2:1.

4. Elément de construction selon la revendication 2 ou 3, **caractérisé en ce que** sont disposés autour du trou des saillies et/ou creux (4) semblables à des éléments d'arrêt, agissant dans la direction périphérique vers le trou (2), en particulier sur la ou les zones plates (12).

5. Elément de construction selon la revendication 4, **caractérisé en ce que** les saillies et/ou creux (4) sont réalisés d'une manière non symétrique dans la direction périphérique autour du trou (2).

6. Elément de construction selon l'une des revendications 2 à 5, **caractérisé en ce qu'**un estampage en forme de dents d'arrêt (4) est réalisé autour du trou (2), en particulier sur la ou les zones plates (12).

7. Elément de construction selon la revendication 6, **caractérisé en ce que** l'estampage en forme de dents d'arrêt (4) correspond à une denture de sous-tête de vis (9).

8. Elément de construction selon la revendication 7, **caractérisé en ce que** la correspondance présente à la manière d'un rochet une direction de rotation et une direction d'arrêt.

9. Elément de construction selon l'une des revendications précédentes, **caractérisé en ce que** la courbure (3) est réalisée en forme de pot.

10. Elément de construction selon l'une des revendications précédentes, **caractérisé en ce que** la courbure (10) comprend un creux (11) en forme de fossé autour du trou (2).

11. Elément de construction selon l'une des revendications précédentes, **caractérisé en ce que** le rapport du diamètre de la courbure (3,10) ou de la largeur de la courbure à l'épaisseur de la tôle se situe dans la plage de 20:1 à 3:1, de préférence dans la plage de 15:1 à 5:1 et qu'elle est selon une préférence particulière de 10:1.

12. Elément de construction selon l'une des revendications précédentes, **caractérisé en ce que** le rapport du diamètre de la courbure (3,10) ou de la largeur de la courbure au décalage du trou (2) du plan de la section se situe dans la plage de 100:1 à 5:1, de préférence dans la plage de 50:1 à 10:1 et qu'elle est selon une préférence particulière de 30:1.

13. Elément de construction selon l'une des revendications précédentes, **caractérisé en ce que** le rapport du diamètre de la courbure (3,10) ou de la largeur de la courbure au diamètre du trou se situe dans la plage de 10:1 à 1,5:1, de préférence dans la plage de 5:1 à 2:1 et qu'elle est selon une préférence particulière de 2,5:1.

14. Elément de construction selon l'une des revendications précédentes, **caractérisé en ce que** l'élément de construction (1) est un élément en tôle.
